# FASCICULE DE BREVET EUROPEEN

(11) **EP 3 168 694 B1**
(45) Date de publication et mention de la délivrance du brevet: **02.01.2019**
(21) Numéro de dépôt: 15194081.4
(22) Date de dépôt: 11.11.2015
(51) Int. Cl.: G04B 47/06, G01P 3/62

(54) **MÉCANISME INDICATEUR DE LA VITESSE ASCENSIONNELLE ET MONTRE DE PLONGÉE COMPORTANT UN TEL MÉCANISME**
ANZEIGEMECHANISMUS DER AUFSTEIGEGESCHWINDIGKEIT, UND MIT EINEM SOLCHEN MECHANISMUS AUSGESTATTETE TAUCHERUHR
MECHANISM INDICATING ASCENSION SPEED AND DIVING WATCH COMPRISING SUCH A MECHANISM

(43) Date de publication de la demande: 17.05.2017
(73) Titulaire: Blancpain SA., 1348 Le Brassus (CH)
(72) Inventeur: Gilomen, Beat, 2540 Grenchen (CH)
(74) Mandataire: ICB SA

(56) Documents cités:
- EP-A2- 2 104 009
- WO-A1-2007/121597

## Description

### Domaine de l'invention

La présente invention concerne un mécanisme indicateur de la vitesse ascensionnelle et plus particulièrement un tel mécanisme comportant un premier mobile et un capteur de pression agencé pour se déformer mécaniquement sous l'effet d'une variation de la pression du milieu environnant, le premier mobile étant relié cinématiquement au capteur de pression de manière à être entraîné en rotation en cas de variation de la pression. La présente invention concerne également une montre de plongée comportant un mécanisme indicateur de la vitesse ascensionnelle.

### Arrière-plan de l'invention

Différents paramètres doivent être connus d'un plongeur lorsqu'il effectue une plongée subaquatique afin de garantir sa sécurité. Le plongeur doit notamment pouvoir connaître instantanément la profondeur à laquelle il se trouve pour ne pas risquer de dépasser une profondeur de plongée maximale préétablie. Le plongeur doit également connaître son temps de plongée pour ne pas épuiser ses réserves en oxygène et pouvoir remonter à la surface en toute sécurité. Deux autres paramètres importants concernent la décompression. Ces paramètres sont la vitesse ascensionnelle et la durée d'éventuels paliers. Connaitre sa vitesse ascensionnelle est d'une importance vitale. En effet, si le plongeur remonte trop vite, il risque une embolie mortelle. La vitesse de remontée maximale préconisée est généralement de 10 m/minute.

Le brevet CH 513 456 décrit une montre équipée de mécanismes permettant d'indiquer la profondeur instantanée, le temps d'immersion et la durée minimale d'un palier de décompression que le plongeur devrait éventuellement observer cinq mètres au-dessous de la surface. On note en revanche que la montre décrite dans ce document antérieur ne comporte pas de mécanisme indicateur de la vitesse ascensionnelle.

Le brevet US 3,910,117 décrit un dispositif destiné à permettre à un plongeur de contrôler sa vitesse ascensionnelle. Toutefois, ce dispositif n'est pas équipé d'un mécanisme indicateur de la vitesse ascensionnelle. Le dispositif décrit dans ce document antérieur comporte deux aiguilles concentriques destinées, l'une à indiquer la profondeur instantanée, et l'autre à effectuer une simulation de l'évolution de la profondeur au cours d'une remontée modèle. Avant de remonter, le plongeur effectue un réglage pour superposer les deux aiguilles. Puis, au moment de débuter la remontée il lance la simulation. Durant la remontée, le plongeur veille en permanence à ce que les deux aiguilles demeurent superposées, de sorte que sa vitesse ascensionnelle est calquée sur celle du modèle à suivre. Un inconvénient de ce dispositif antérieur est qu'il n'est pas possible de changer la vitesse ascensionnelle.

Le brevet EP 2 104 009 décrit une montre chronographe comportant un mécanisme capteur mécanique de la pression extérieure qui coopère, par l'intermédiaire d'un mécanisme de transmission, avec des moyens de démarrage et/ou d'arrêt d'un mécanisme chronographe mécanique de la montre afin que le mécanisme chronographe soit démarré et/ou arrêté automatiquement en fonction de la pression extérieure.

### Résumé de l'invention

L'invention a notamment pour objectif de pallier les inconvénients des différents mécanismes connus.

Plus précisément, un objectif de l'invention est de fournir un mécanisme indicateur de la vitesse ascensionnelle permettant à un plongeur de connaitre sa vitesse ascensionnelle afin de pouvoir l'adapter si elle devenait supérieure à la vitesse de remontée maximale préconisée.

A cet effet, la présente invention concerne un mécanisme indicateur de la vitesse ascensionnelle comportant un premier mobile et un capteur de pression agencé pour se déformer mécaniquement sous l'effet d'une variation de la pression du milieu environnant, le premier mobile étant relié cinématiquement au capteur de pression de manière à être entraîné en rotation en cas de variation de la pression.

Selon l'invention, ledit mécanisme comporte en outre un second mobile agencé pour être entraîné par le premier mobile dans un seul sens de rotation à partir d'une position de départ dans une position de mesure correspondant à la diminution de pression, des moyens de débrayage et de rappel agencés pour être actionnés à intervalles réguliers pour débrayer le second mobile et pour le ramener à la position de départ, un mécanisme d'affichage de la vitesse ascensionnelle relié cinématiquement au second mobile et comprenant un organe indicateur agencé pour occuper à chaque intervalle régulier une position d'affichage représentative de la diminution de pression durant ledit intervalle et donc de la vitesse ascensionnelle, et des moyens de synchronisation actionnés auxdits intervalles réguliers et agencés pour maintenir ladite position d'affichage de l'organe indicateur pendant ledit intervalle régulier.

La présente invention concerne également une montre de plongée comportant un mouvement mécanique ou électromécanique, et un mécanisme indicateur de la vitesse ascensionnelle tel que défini ci-dessus, les moyens de débrayage et de rappel ainsi que les moyens de synchronisation étant agencés pour être actionnés par le mouvement auxdits intervalles réguliers.

Le mécanisme selon l'invention permet à un plongeur de connaitre à chaque intervalle régulier sa vitesse ascensionnelle moyenne mesurée durant ledit intervalle.

### Description sommaire des dessins

D'autres caractéristiques et avantages de la présente invention apparaîtront à la lecture de la description qui va suivre, donnée uniquement à titre d'exemple non limitatif, et faite en référence aux dessins annexés dans lesquels :

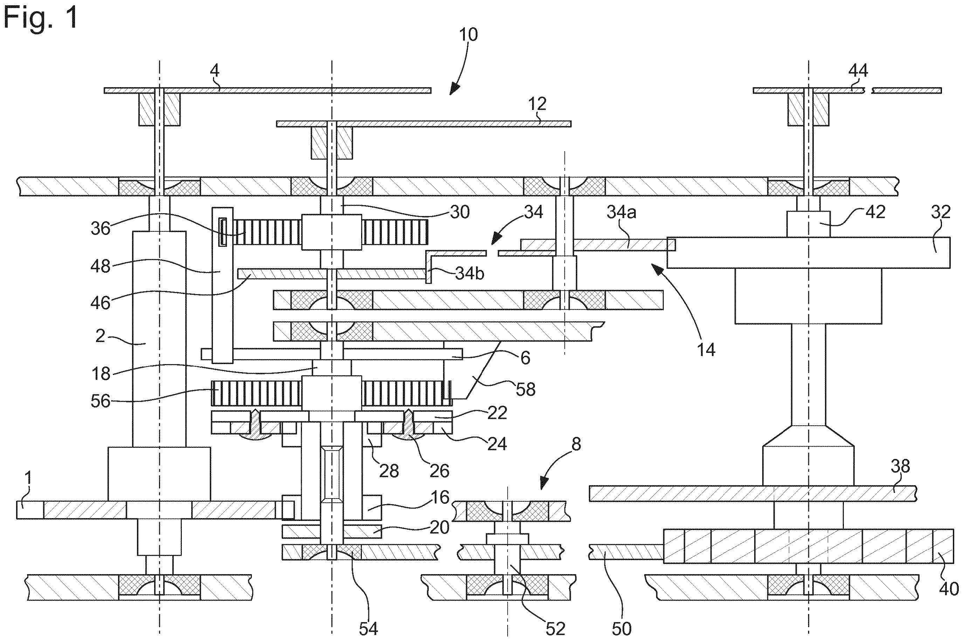

- la figure 1 est une vue schématisée en coupe d'un mécanisme indicateur de la vitesse ascensionnelle selon l'invention.

### Description détaillée d'un mode de réalisation préféré

En référence à la figure 1, le mécanisme indicateur de la vitesse ascensionnelle selon l'invention comprend un premier mobile 1 solidaire d'un axe 2 monté pivotant sur le bâti et lié cinématiquement à un capteur de pression agencé pour se déformer mécaniquement sous l'effet d'une variation de la pression du milieu environnant (non représenté), tel qu'une capsule anéroïde. Un tel capteur comprend une boite anéroïde. Lors de la descente du plongeur, la pression augmente et la boite anéroïde se comprime. Si le plongeur remonte, la pression diminue et la boite anéroïde se dilate de nouveau. Ces déformations sont mesurées et transformées dans un mouvement qui peut être linéaire, logarithmique ou autre, amplifié par un train d'engrenages. On obtient ainsi un déplacement « s » en fonction de la différence de profondeur. La montre comprend un mouvement permettant de mesurer le temps t. La vitesse étant définie par le déplacement vertical s divisé par le temps t (v = s/t), on obtient la vitesse de remontée du plongeur en affichant à des intervalles constants ou réguliers une valeur correspondant au déplacement vertical s du plongeur durant ledit intervalle de temps régulier. Cet intervalle de temps régulier peut être de 5 secondes par exemple. Il est bien évident qu'un autre intervalle de temps peut être choisi par le constructeur de la montre.

Le capteur de pression est agencé de sorte que les déplacements d de la capsule anéroïde arrivent sur l'axe 2 sous la forme d'un déplacement angulaire en fonction de la variation de pression due à la différence de profondeur lors de la remontée du plongeur. Ainsi le premier mobile 1 est entraîné en rotation par l'axe 2 en cas de variation de la pression.

L'axe 2 peut porter également une aiguille d'affichage de la profondeur 4.

Selon l'invention, le mécanisme indicateur de la vitesse ascensionnelle comporte en outre un second mobile 6 agencé pour être entraîné par le premier mobile 1 dans un seul sens de rotation à partir d'une position de départ (v= 0, v= vitesse ascensionnelle) dans une position de mesure correspondant à la variation (diminution) de pression, des moyens de débrayage et de rappel 8 agencés pour être actionnés à intervalles réguliers pour débrayer le second mobile 6 et pour le ramener à la position de départ, un mécanisme 10 d'affichage de la vitesse ascensionnelle v relié cinématiquement au second mobile 6 et comprenant un organe indicateur 12 agencé pour occuper à chaque intervalle régulier une position d'affichage représentative de la variation (diminution) de pression durant ledit intervalle et donc de la vitesse ascensionnelle, et des moyens de synchronisation 14 actionnés à chaque intervalle régulier et agencés pour maintenir ladite position d'affichage de l'organe indicateur 12 pendant ledit intervalle régulier.

Le mécanisme comprend également un pignon 16 monté sur un arbre 18 monté pivotant sur le bâti et portant le second mobile 6. Ledit pignon 16 est agencé pour coopérer avec le premier mobile 1, le second mobile 6 et ledit pignon 16 étant couplés par un accouplement à sens unique. Plus précisément, le pignon 16 est monté libre sur l'arbre 18 et est maintenu en hauteur par une rondelle 20. Le pignon 16 et l'arbre 18 sont agencés de sorte que le pignon 16 constitue un pignon baladeur commandé par les moyens de débrayage et de rappel 8 pour se désengrener du premier mobile 1 lorsqu'ils sont actionnés, comme cela sera décrit ci-après. L'accouplement à sens unique entre le second mobile 6 et le pignon 16 est réalisé au moyen d'une roue à cliquets 22 solidaire de l'arbre 18. A cet effet, des cliquets 24 fixés au moyen d'axes 26 sur la roue 22 transmettent la rotation d'un pignon 28 solidaire du pignon 16 à la roue 22, qui va alors tourner, uniquement lorsque la pression mesurée par le capteur de pression diminue. Lorsque la pression augmente, les cliquets 24 laissent tourner le pignon 28 librement, et donc le pignon 16, de sorte que la rotation du pignon 16 et donc du premier mobile 1 n'est pas transmise à la roue à cliquets 22, cette dernière restant alors immobile. La roue à cliquets 22 étant solidaire du second mobile 6, la rotation du premier mobile 1 n'est transmise au second mobile 6 que lorsque la pression mesurée par le capteur de pression diminue, donc lorsque le plongeur remonte. Lorsque la pression mesurée par le capteur de pression augmente (le plongeur descend), le second mobile 6 n'est pas entrainé.

Le mécanisme d'affichage de la vitesse ascensionnelle 10 comprend un arbre 30 monté pivotant sur le bâti, coaxialement à l'arbre 18. L'arbre 30 porte l'organe indicateur 12.

Les moyens de synchronisation 14 comprennent une première commande 32 synchronisée avec les moyens de débrayage et de rappel 8 du second mobile 6 pour être actionnée à chaque intervalle régulier. Plus particulièrement, la première commande 32 est constituée d'une came coaxiale et solidaire d'une roue de seconde 38 du mouvement, et agencée pour être activée à chaque intervalle régulier. Par exemple, la came 32 comporte des dents agencées pour coopérer avec le frein 34, le nombre de dents étant choisi en fonction de la durée de l'intervalle de mesure de la vitesse ascensionnelle choisi. Notamment, pour un intervalle de 5 secondes, la came 32 comporte 12 dents. Pour assurer la synchronisation avec les moyens de débrayage et de rappel 8, la première commande 32 et la roue de seconde 38 sont solidaires d'une deuxième commande 40 agencée pour actionner les moyens de débrayage et de rappel 8 aux mêmes intervalles réguliers comme cela sera décrit ci-après. A cet effet, la deuxième commande 40 est constituée d'une came coaxiale et solidaire d'une roue de seconde 38 du mouvement, et agencée pour être activée à chaque intervalle régulier. Par exemple, la came 40 comporte des dents agencées pour coopérer avec les moyens de débrayage et de rappel 8, le nombre de dents étant choisi en fonction de la durée de l'intervalle de mesure de la vitesse ascensionnelle choisi. Notamment, pour un intervalle de 5 secondes, la came 40 comporte également 12 dents. Les première 32 et deuxième 40 commandes et la roue de seconde 38 sont solidaires d'un axe 42 monté pivotant sur le bâti et portant l'aiguille des secondes 44.

Les moyens de synchronisation 14 comprennent également un frein 34 agencé pour bloquer l'organe indicateur 12 dans sa position d'affichage durant ledit intervalle et commandé par ladite première commande 32 pour se désengager auxdits intervalles réguliers. Le frein 34 comprend un corps 34a agencé pour coopérer avec la première commande 32 et notamment pour être soulevé à chaque passage d'une de ses dents. L'extrémité 34b du frein 34 est agencée pour retenir un disque 46 solidaire de l'axe 30 qui porte l'organe indicateur 12.

Les moyens de synchronisation 14 comprennent également un premier organe de rappel 36 de l'organe indicateur 12 lié cinématiquement au second mobile 6 et agencé pour déplacer l'organe indicateur 12, lorsque le frein 34 est désengagé à chaque intervalle régulier, dans la position d'affichage correspondant à la position de mesure du second mobile 6 durant ledit intervalle. Dans la variante représentée, le premier organe de rappel 36 est un ressort. Dans une autre variante non représentée, le premier organe de rappel peut être un coeur agencé pour créer un couple de remise à zéro sous l'effet d'un marteau maintenu en appui permanent au moyen d'un ressort agissant sur ledit marteau. L'organe indicateur 12 est lié cinématiquement au second mobile 6 grâce à des moyens d'entrainement de l'organe indicateur 12 portés par ledit second mobile 6. Ces moyens d'entrainement de l'organe indicateur 12 sont constitués plus particulièrement par une goupille 48 solidaire du second mobile 6 d'une part et du premier organe de rappel 36 d'autre part. Ainsi, dans la variante représentée, une extrémité du premier ressort de rappel 36 est fixée à la goupille 48, son autre extrémité étant fixée à l'arbre 30.

Les moyens de débrayage et de rappel 8 comprennent la deuxième commande 40 agencée pour être actionnée à chaque intervalle régulier. Ils comprennent également une bascule de débrayage 50 portant le pignon 16 et commandée par la deuxième commande 40 pour pivoter à chaque intervalle régulier. Plus précisément, la bascule de débrayage 50 est montée pivotante sur le bâti autour de son axe 52. A une de ses extrémités, la bascule de débrayage 50 porte un palier 54 qui supporte le pignon baladeur 16. Ce mécanisme permet de désengrener le pignon baladeur 16 du premier mobile 1 lorsque la bascule de débrayage est actionnée. A son autre extrémité, la bascule de débrayage 50 est commandée par les dents prévues sur ladite deuxième commande 40 pour être actionnée et pivoter auxdits intervalles réguliers. Elle comprend un ressort de rappel (non représenté) pour la ramener en position.

Les moyens de débrayage et de rappel 8 comprennent également un deuxième organe de rappel 56 agencé pour ramener le second mobile 6 à la position de départ lorsque les moyens de débrayage et de rappel 8 sont actionnés à chaque intervalle régulier. Dans la variante représentée, le deuxième organe de rappel 56 est un ressort. Dans une autre variante non représentée, le deuxième organe de rappel peut être un coeur agencé pour créer un couple de remise à zéro sous l'effet d'un marteau maintenu en appui permanent au moyen d'un ressort agissant sur ledit marteau. Dans la variante représentée, le second ressort de rappel 56 comprend une extrémité fixée sur l'arbre 18 et une extrémité fixée sur le bâti, par exemple un pont 58. De plus, le pont 58 est agencé pour constituer une butée pour le second mobile 6 lorsque ce dernier est ramené dans sa position de départ sous l'action du second organe de rappel 56.

Le fonctionnement du mécanisme selon l'invention est le suivant : lorsque le plongeur se déplace verticalement sous l'eau, la capsule anéroïde transmet à l'axe 2 les déplacements du plongeur. Le premier mobile 1, ainsi que les pignons 16 et 28 sont donc entrainés en rotation en fonction du déplacement. Si le déplacement du plongeur est dans le sens d'une augmentation de la pression (la profondeur de plongée augmente), les cliquets 24 ne transmettent pas ce déplacement à la roue 22. Si le déplacement du plongeur est dans le sens d'une diminution de la pression (le plongeur remonte et la profondeur de plongée diminue), la roue 22 est entrainée en rotation, les cliquets 24 autorisant la transmission du mouvement du pignon 16 à ladite roue 22. L'arbre 18 solidaire de la roue 22 est alors entrainé en rotation selon un angle qui est fonction du déplacement vertical du plongeur. Le second mobile 6, solidaire de l'arbre, la goupille 48 et l'extrémité y attachée du premier ressort 36 sont entrainés en rotation du même angle, correspondant à la position de mesure du second mobile 6. L'extrémité 34b du frein 34 maintient le disque 46 en opposition au couple du premier ressort de rappel 36, de sorte que l'arbre 30 et l'organe indicateur 12 restent immobiles pendant l'intervalle régulier, par exemple 5 secondes. Le corps 34a du frein 34 est en appui sur la première commande 32 entrainée par l'axe des secondes 42 et comportant 12 dents pour actionner le frein 34 à chaque intervalle régulier, soit toutes les 5 secondes. Lorsque le frein 34 est actionné par la première commande 32, il libère le disque 46. Sous l'effet du premier ressort de rappel 36, l'arbre 30 et l'organe indicateur 12 se déplacent et se repositionnent par rapport à la position de la goupille 48. L'organe indicateur 12 a donc pivoté de l'angle qui est fonction du déplacement du plongeur pendant l'intervalle régulier qui vient de s'écouler, soit les cinq secondes précédentes. Après le passage de la dent de la première commande 32, le frein 34 reprend sa position, son extrémité 34b bloquant de nouveau le disque 46, et donc l'organe indicateur 12. Ledit organe indicateur 12 se trouve alors dans sa position d'affichage pour afficher, pendant un intervalle régulier, soit 5 secondes, la vitesse ascensionnelle correspondant au déplacement du plongeur pendant l'intervalle régulier précédent, soit ici les cinq secondes précédentes. Ainsi, la vitesse ascensionnelle est maintenue affichée par l'organe indicateur 12 pendant une durée correspondant à l'intervalle régulier, soit ici cinq secondes, ce qui permet au plongeur une lecture confortable de cette information.

Au moment où le frein 34 reprend appui sur le disque 46, une dent de la deuxième commande 40 passe devant la bascule de débrayage 50 et la fait pivoter partiellement autour de son axe 52. Le palier 54 porté par la bascule 50 se déplace et la denture du pignon baladeur 16 se désengrène du premier mobile 1. Sous l'action du deuxième ressort de rappel 56, l'arbre 18 est ramené en arrière pour amener le deuxième mobile 6 en appui contre le pont 58, de sorte que le deuxième mobile 6 reprend sa position de départ. Le deuxième mobile 6 ramène également la goupille 48 et l'extrémité du premier ressort de rappel 36 dans leur position de départ, créant un couple négatif dudit premier ressort de rappel 36. Après le passage de la dent de la deuxième commande 40, la bascule de débrayage 50 retombe dans sa position initiale, ramenée par son ressort de rappel, et le pignon baladeur 16 engrène de nouveau avec le premier mobile 1. Le mécanisme reprend de la même manière, l'organe indicateur 12 faisant un saut toutes les cinq secondes pour afficher pendant cinq secondes la vitesse ascensionnelle correspondant au déplacement vertical du plongeur pendant les cinq secondes précédentes. Le saut sera en avant si la vitesse ascensionnelle a augmenté ou en arrière si la vitesse ascensionnelle a diminué, du fait du couple plus ou moins grand du premier ressort de rappel 36.

Les première et deuxième commandes 32 et 40 étant solidaires du même axe des secondes 42, permettent une synchronisation du mécanisme d'affichage de la vitesse ascensionnelle avec les moyens de débrayage et de rappel du second mobile. Toutefois, lesdites première et deuxième commandes sont agencées pour être décalées de quelques dixièmes de secondes, de sorte que le frein 34 est actionné et repositionné quelques dixièmes de seconde (typiquement 0.1 à 0.4 s) avant le débrayage et le rappel du second mobile 6.

L'intervalle de temps régulier peut être par exemple de 5 secondes. Le mécanisme selon l'invention permet en conséquence de rafraichir la mesure de la vitesse ascensionnelle toutes les 5 secondes, ce qui est un bon compromis entre la précision recherchée et la rapidité de rafraichissement de l'information demandée. Un autre intervalle de temps peut être choisi en adaptant le nombre de dents prévues sur les cames.

D'autres mécanismes peuvent être associés au mécanisme selon l'invention. Par exemple, il est possible de prévoir une alarme permettant d'avertir le plongeur lorsque sa vitesse ascensionnelle est trop élevée. Cette alarme peut être sous la forme d'une sonnerie, d'une vibration, d'une lumière, ou d'une combinaison de ces différentes possibilités. Par exemple, un mécanisme de sonnerie peut être associé au mécanisme indicateur de la vitesse ascensionnelle en prévoyant une sonnerie agencée pour se déclencher si la vitesse du plongeur dépasse un seuil maximum autorisé de 10 m/minute, et donc si le second mobile 6 parcourt un angle de rotation correspondant à cette vitesse maximale autorisée et arrive dans une position selon laquelle il déclenche une sonnerie. Par exemple, un doigt peut être prévu sur le second mobile 6, en faisant saillie pour déclencher une sonnerie si ce doigt dépasse un angle qui correspond sur l'organe indicateur 12 à une vitesse maximum autorisée de 10 m/minute.

Il est possible également de prévoir un mécanisme d'affichage du maximum de la profondeur atteinte et du maximum de la vitesse ascensionnelle. Pour le maximum de la profondeur atteinte, il est possible de prévoir une aiguille de type rattrapante sur l'axe 2 portant l'aiguille d'affichage de la profondeur 4, ladite aiguille d'affichage du maximum de la profondeur atteinte étant poussée par l'aiguille d'affichage de la profondeur 4 et restant sur la position maximale dans laquelle l'aiguille d'affichage de la profondeur 4 l'a amenée. Un second mécanisme de sonnerie est associé au mécanisme d'affichage du maximum de la profondeur atteinte agencé pour se déclencher si la profondeur dépasse un seuil maximum autorisé. De même, pour le maximum de la vitesse ascensionnelle, il est possible de prévoir une aiguille de type rattrapante sur l'axe 30 portant l'organe indicateur de la vitesse ascensionnelle 12, ladite aiguille d'affichage du maximum de la vitesse ascensionnelle étant poussée par ledit organe indicateur 12 et restant sur la position maximale dans laquelle l'organe indicateur 12 l'a amenée. Ces aiguilles d'affichage du maximum de la profondeur atteinte et du maximum de la vitesse ascensionnelle sont montées avec une légère friction et remises à zéro au moyen de deux poussoirs.

Il est possible également de prévoir un mécanisme de déclenchement pour mesurer le temps de plongée. Ce mécanisme peut comprendre par exemple une goupille prévue sur le premier mobile 1 et agencée pour déclencher un compteur de minutes de plongée. Ainsi, lorsque la plongée a commencé, le premier mobile 1 pivote en entrainant la goupille qui est disposée pour déclencher le compteur de minutes par exemple lorsque le plongeur a parcouru un mètre de profondeur. Lorsque le plongeur remonte et arrive à un mètre de profondeur, la goupille est agencée pour arrêter le compteur de minutes. Ainsi, le plongeur a connaissance de son temps de plongée, sans avoir à effectuer des réglages initiaux, avant de plonger.

Il est également possible de prévoir un mécanisme de couplage du second mobile 6 avec le pignon 16, agencé pour solidariser à la demande ledit second mobile avec ledit pignon, la position zéro étant alors définie par la position de repos (désarmée) du ressort de rappel. Cette construction permet d'avoir un affichage de la vitesse de descente comme de remontée du plongeur.

## Revendications

1. Mécanisme de pièce d'horlogerie indiquant la vitesse ascensionnelle comportant un premier mobile (1) et un capteur de pression agencé pour se déformer mécaniquement sous l'effet d'une variation de la pression du milieu environnant, le premier mobile (1) étant relié cinématiquement au capteur de pression de manière à être entraîné en rotation en cas de variation de la pression, ledit mécanisme comportant en outre un second mobile (6) agencé pour être entraîné par le premier mobile (1) dans un seul sens de rotation à partir d'une position de départ dans une position de mesure correspondant à une diminution de pression, des moyens de débrayage et de rappel (8) agencés pour débrayer le second mobile (6), **caractérisé en ce que** lesdits moyens de débrayage et de rappel (8) sont agencés pour être actionnés à intervalles réguliers pour débrayer le second mobile (6) et pour le ramener à la position de départ, et **en ce qu'**il comporte en outre un mécanisme d'affichage de la vitesse ascensionnelle (10) relié cinématiquement au second mobile (6) et comprenant un organe indicateur (12) agencé pour occuper à chaque intervalle régulier une position d'affichage représentative de la diminution de pression durant ledit intervalle et donc de la vitesse ascensionnelle, et des moyens de synchronisation (14) actionnés à chaque intervalle régulier et agencés pour maintenir ladite position d'affichage de l'organe indicateur (12) pendant ledit intervalle régulier.

2. Mécanisme selon la revendication 1, **caractérisé en ce que** les moyens de synchronisation comprennent une première commande (32) synchronisée avec les moyens de débrayage et de rappel (8) du second mobile (6) pour être actionnée à chaque intervalle régulier, un frein (34) agencé pour bloquer l'organe indicateur (12) dans sa position d'affichage durant ledit intervalle et commandé par ladite première commande (32) pour se désengager auxdits intervalles réguliers, et un premier organe de rappel (36) de l'organe indicateur (12) lié cinématiquement au second mobile (6) et agencé pour déplacer l'organe indicateur (12), lorsque le frein (34) est désengagé à chaque intervalle régulier, dans la position d'affichage correspondant à la position de mesure du second mobile (6) durant ledit intervalle.

3. Mécanisme selon l'une des revendications précédentes, **caractérisé en ce que** le second mobile (6) porte des moyens d'entrainement de l'organe indicateur (12).

4. Mécanisme selon les revendications 2 et 3, **caractérisé en ce que** lesdits moyens d'entrainement de l'organe indicateur (12) comprennent une goupille (48) solidaire du second mobile (6) d'une part et du premier organe de rappel (36) d'autre part.

5. Mécanisme selon l'une des revendications précédentes, **caractérisé en ce qu'**il comprend un pignon (16), monté sur un arbre (18) portant le second mobile (6), ledit pignon (16) étant agencé pour coopérer avec le premier mobile (1), le second mobile (6) et ledit pignon (16) étant couplés par un accouplement à sens unique.

6. Mécanisme selon la revendication précédente, **caractérisé en ce que** le pignon (16) est un pignon baladeur commandé par les moyens de débrayage et de rappel (8) pour se désengrener du premier mobile (1) lorsqu'ils sont actionnés.

7. Mécanisme selon l'une des revendications 5 et 6, **caractérisé en ce que** les moyens de débrayage et de rappel (8) comprennent une deuxième commande (40) agencée pour être actionnée à chaque intervalle régulier, une bascule de débrayage (50) portant ledit pignon (16) et commandée par ladite deuxième commande (40) pour pivoter auxdits intervalles réguliers, et un deuxième organe de rappel (56) agencé pour ramener le second mobile (6) à la position de départ lorsque les moyens de débrayage et de rappel (8) sont actionnés à chaque intervalle régulier.

8. Mécanisme selon l'une des revendications précédentes, **caractérisé en ce que** le capteur de pression est une capsule anéroïde.

9. Montre de plongée comportant un mouvement mécanique ou électromécanique, et un mécanisme indicateur de la vitesse ascensionnelle conforme à l'une des revendications précédentes, les moyens de débrayage et de rappel (8) ainsi que les moyens de synchronisation (14) étant agencés pour être actionnés par le mouvement à intervalles réguliers.

10. Montre selon la revendication 9, **caractérisée en ce que** les moyens de synchronisation (14) ainsi que les moyens de débrayage et de rappel (8) comprennent respectivement une première (32) et une deuxième (40) commandes constituées d'une came coaxiale et solidaire d'une roue de seconde (38) du mouvement et agencée pour être activée à chaque intervalle régulier.

11. Montre selon l'une des revendications 9 et 10, **caractérisée en ce qu'**elle comprend un premier mécanisme de sonnerie associé au mécanisme indicateur de la vitesse ascensionnelle, ledit premier mécanisme de sonnerie comprenant une sonnerie agencée pour se déclencher si la vitesse du plongeur dépasse un seuil maximum autorisé.

12. Montre selon l'une des revendications 9 à 11, **caractérisée en ce qu'**elle comprend un mécanisme d'affichage du maximum de la profondeur atteinte, associé à un second mécanisme de sonnerie agencé pour se déclencher si la profondeur dépasse un seuil maximum autorisé.

## Patentansprüche

1. Uhrenmechanismus zur Anzeige der Aufstiegsgeschwindigkeit, umfassend ein erstes Drehteil (1) und einen Drucksensor, ausgelegt, sich unter der Wirkung einer Änderung des Drucks des umgebenden Mediums mechanisch zu verformen, wobei das erste Drehteil (1) mit dem Drucksensor kinematisch verbunden ist, um im Falle einer Druckänderung in Drehung versetzt zu werden, wobei der Mechanismus ferner ein zweites Drehteil (6) umfasst, das angeordnet ist, von dem ersten Drehteil (1) nur in einer Drehrichtung, ausgehend von einer Ausgangsposition in eine Messposition, die einem Druckabfall entspricht, angetrieben zu werden, und Auskupplungs- und Rückstellmittel (8), die angeordnet sind, das zweite Drehteil (6) auszukuppeln, **dadurch gekennzeichnet, dass** die Auskupplungs- und Rückstellmittel (8) angeordnet sind, in regelmäßigen Intervallen betätigt zu werden, um das zweite Drehteil (6) auszukuppeln und um es in die Ausgangsposition zurückzubringen, und dass er ferner einen Mechanismus (10) für die Anzeige der Aufstiegsgeschwindigkeit umfasst, der mit dem zweiten Drehteil (6) kinematisch verbunden ist und ein Anzeigeorgan (12), das angeordnet ist, in jedem regelmäßigen Intervall eine Anzeigeposition einzunehmen, die den Druckabfall während des Intervalls und somit die Aufstiegsgeschwindigkeit repräsentiert, und Synchronisationsmittel (14) umfasst, die in jedem regelmäßigen Intervall betätigt werden und angeordnet sind, die Anzeigeposition des Anzeigeorgans (12) während des regelmäßigen Intervalls beizubehalten.

2. Mechanismus nach Anspruch 1, **dadurch gekennzeichnet, dass** die Synchronisationsmittel eine erste Steuerung (32), die mit den Auskupplungs- und Rückstellmitteln (8) des zweiten Drehteils (6) synchronisiert sind, um in jedem regelmäßigen Intervall betätigt zu werden, eine Bremse (34), die angeordnet ist zum Blockieren des Anzeigeorgans (12) in seiner Anzeigeposition während des Intervalls und durch die erste Steuerung (32) gesteuert wird, um in den regelmäßigen Intervallen außer Eingriff zu gelangen, und ein erstes Rückstellorgan (36) des Anzeigeorgans (12) umfassen, das mit dem zweiten Drehteil (6) kinematisch verbunden ist und angeordnet ist, das Anzeigeorgan (12) dann, wenn die Bremse (34) in jedem regelmäßigen Intervall außer Eingriff ist, in die Anzeigeposition zu verlagern, die der Messposition des zweiten Drehteils (6) während des Intervalls entspricht.

3. Mechanismus nach einem der vorhergehenden Ansprüche, **dadurch gekennzeichnet, dass** das zweite Drehteil (6) Antriebsmittel für das Anzeigeorgan (12) trägt.

4. Mechanismus nach den Ansprüchen 2 und 3, **dadurch gekennzeichnet, dass** die Antriebsmittel für das Anzeigeorgan (12) einen Sperrstift (48) umfassen, der mit dem zweiten Drehteil (6) einerseits und mit dem ersten Rückstellorgan (36) andererseits fest verbunden ist

5. Mechanismus nach einem der vorhergehenden Ansprüche, **dadurch gekennzeichnet, dass** er ein Ritzel (16) umfasst, das an einer das zweite Drehteil (6) tragenden Welle (18) montiert ist, wobei das Ritzel (16) angeordnet ist, mit dem ersten Drehteil (1) zusammenzuwirken, wobei das zweite Drehteil (6) und das Ritzel (16) durch unidirektionale Kopplung gekoppelt sind.

6. Mechanismus nach dem vorhergehenden Anspruch, **dadurch gekennzeichnet, dass** das Ritzel (16) ein Kupplungsritzel ist, das durch die Auskupplungs- und Rückstellmittel (8) gesteuert wird, um bei ihrer Betätigung von dem ersten Drehteil (1) außer Eingriff zu gelangen.

7. Mechanismus nach einem der Ansprüche 5 und 6, **dadurch gekennzeichnet, dass** die Auskupplungs- und Rückstellmittel (8) eine zweite Steuerung (40), die angeordnet ist, in jedem regelmäßigen Intervall betätigt zu werden, eine Auskupplungswippe (50), die das Ritzel (16) trägt und durch die zweite Steuerung (40) gesteuert wird, um in den regelmäßigen Intervallen zu schwenken, und ein zweites Rückstellorgan (56) zum Zurückführen des zweiten Drehteils (6) in die Ausgangsposition bei Betätigung der Auskupplungs- und Rückstellmittel (8) in jedem regelmäßigen Intervall umfassen.

8. Mechanismus nach einem der vorhergehenden Ansprüche, **dadurch gekennzeichnet, dass** der Drucksensor eine Aneroidkapsel ist.

9. Taucheruhr, umfassend ein mechanisches oder elektromechanisches Werk und einen Mechanismus für die Anzeige der Aufstiegsgeschwindigkeit nach einem der vorhergehenden Ansprüche, wobei die Auskupplungs- und Rückstellmittel (8) sowie die Synchronisationsmittel (14) angeordnet sind, durch das Werk in regelmäßigen Intervallen betätigt zu werden.

10. Uhr nach Anspruch 9, **dadurch gekennzeichnet, dass** die Synchronisationsmittel (14) sowie die Auskupplungs- und Rückstellmittel (8) eine erste (32) bzw. eine zweite (40) Steuerung umfassen, die durch einen Nocken gebildet sind, der zu einem Sekundenrad (38) des Werks koaxial ist und damit fest verbunden ist und angeordnet ist, in jedem regelmäßigen Intervall aktiviert zu werden.

11. Uhr nach einem der Ansprüche 9 und 10, **dadurch gekennzeichnet, dass** sie einen ersten Alarmsignalmechanismus umfasst, der dem Mechanismus für die Anzeige der Aufstiegsgeschwindigkeit zugeordnet ist, wobei der erste Alarmsignalmechanismus ein Alarmsignal enthält, das dafür ausgelegt ist, ausgelöst zu werden, wenn die Geschwindigkeit des Tauchers einen zulässigen maximalen Schwellenwert überschreitet.

12. Uhr nach einem der Ansprüche 9 bis 11, **dadurch gekennzeichnet, dass** sie einen Mechanismus für die Anzeige des Maximums der erreichten Tiefe umfasst, der einem zweiten Alarmsignalmechanismus zugeordnet ist, der dafür ausgelegt ist, ausgelöst zu werden, wenn die Tiefe einen zulässigen maximalen Schwellenwert überschreitet.

## Claims

1. Ascent rate indicator mechanism for a timepiece comprising a first wheel set (1) and a pressure sensor arranged to deform mechanically under the effect of a pressure variation in the surrounding medium, the first wheel set (1) being kinematically connected to the pressure sensor so as to be driven in rotation in the event of a pressure variation, said ascent rate indicator mechanism further comprising a second wheel set (6) arranged to be driven by the first wheel set (1) in a single direction of rotation from a start position into a measurement position corresponding to a decrease in pressure, uncoupling and return means (8) arranged to uncouple the second wheel set (6), **characterized in that** said uncoupling and return means (8) are arranged to be actuated at regular intervals to uncouple the second wheel set (6) and to return it to the start position, and **in that** it further comprises an ascent rate display mechanism (10) kinematically connected to the second wheel set (6) and comprising an indicator member (12) arranged to occupy, at each regular interval, a display position representative of the decrease in pressure during said interval and thus of the ascent rate, and synchronization means (14) actuated at each regular interval and arranged to maintain said display position of the indicator member (12) during said regular interval.

2. Ascent rate indicator mechanism according to claim 1, **characterized in that** the synchronization means comprise a first control element (32) synchronized with the means (8) for uncoupling and returning the second wheel set (6) to be actuated at each regular interval, a brake (34) arranged to lock the indicator member (12) in the display position thereof during said interval and controlled by said first control element (32) to disengage at said regular intervals, and a first member (36) for returning indicator member (12), kinematically connected to the second wheel set (6) and arranged to move the indicator member (12), when the brake (34) is disengaged at each regular interval, into the display position corresponding to the measurement position of the second wheel set (6) during said interval.

3. Ascent rate indicator mechanism according to any of the preceding claims, **characterized in that** the second wheel set (6) carries means for driving the indicator member (12).

4. Ascent rate indicator mechanism according to claims 2 and 3, **characterized in that** said drive means for the indicator member (12) comprise a pin (48), integral with the second wheel set (6) on the one hand and with the first return member (36) on the other.

5. Ascent rate indicator mechanism according to any of the preceding claims, **characterized in that** the ascent rate indicator mechanism comprises a pinion (16), mounted on an arbor (18) carrying the second wheel set (6), said pinion (16) being arranged to cooperate with the first wheel set (1), the second wheel set (6) and said pinion (16) being coupled by a one-directional coupling.

6. Ascent rate indicator mechanism according to the preceding claim, **characterized in that** the pinion (16) is a sliding pinion controlled by the uncoupling and return means (8) to move out of mesh with the first wheel set (1) when said uncoupling and return means are actuated.

7. Ascent rate indicator mechanism according to any of claims 5 and 6, **characterized in that** the uncoupling and return means (8) comprise a second control element (40) arranged to be actuated at each regular interval, an uncoupling lever (50) carrying said pinion (16) and controlled by said second control element (40) to pivot at said regular intervals, and a second return member (56) arranged to return the second wheel set (6) to the start position thereof when the uncoupling and return means (8) are actuated at each regular interval.

8. Ascent rate indicator mechanism according to any of the preceding claims, **characterized in that** the pressure sensor is an aneroid capsule.

9. Diver's watch comprising a mechanical or electromechanical movement, and an ascent rate indicator mechanism according to any of the preceding claims, the uncoupling and return means (8) and the synchronization means (14) being arranged to be actuated by the movement at regular intervals.

10. Diver's watch according to claim 9, **characterized in that** the synchronization means (14) and the uncoupling and return means (8) respectively comprise a first (32) and a second (40) control member each formed of a cam that is coaxial and integral with a fourth wheel (38) of the movement and arranged to be actuated at each regular interval.

11. Diver's watch according to any of claims 9 and 10, **characterized in that** the diver's watch comprises a first striking mechanism associated with the ascent rate indicator mechanism, said first striking mechanism comprising an alarm arranged to be released if the diver's depth exceeds a maximum allowed threshold.

12. Diver's watch according to any of claims 9 to 11, **characterized in that** the diver's watch comprises a mechanism for displaying the maximum depth reached, associated with a second striking mechanism arranged to be released if the depth exceeds a maximum allowed threshold.
